# EUROPÄISCHE PATENTANMELDUNG

(11) **EP 2 154 118 A1**
(43) Veröffentlichungstag der Anmeldung: **17.02.2010**
(21) Anmeldenummer: 08161423.2
(22) Anmeldetag: 30.07.2008
(51) Int. Cl.: C04B 24/26, C04B 28/14, C04B 24/16, C04B 24/24

(54) **Dispergiermittel für Gipszusammensetzungen**

(71) Anmelder: Sika Technology AG, 6340 Baar (CH)
(72) Erfinder: Hampel, Christina, 8102 Oberengstringen (CH); Sulser, Ueli, 8103 Unterengstringen (CH); Al Shemari, Jabbar, 8052 Zürich (CH); Zimmermann, Jörg, 8046 Zürich (CH)
(74) Vertreter: Sika Patent Attorneys

(57) **Zusammenfassung**

Die vorliegende Erfindung betrifft die Verwendung eines Polymers **P** als Dispergiermittel, insbesondere als Verflüssiger, für Gipszusammensetzungen, insbesondere für Gipsplatten, sowie Gipszusammensetzungen umfassend das Polymer **P**. Das Polymer **P** umfasst mindestens eine Säureeinheit und mindestens eine lange Seitenkette mit einem Molekulargewicht von mindestens 1800 g/mol umfassend Polyoxyalkylengruppen, und weist einen Säuregehalt von 1.5 bis 4, bevorzugt 1.7 bis 3.5 mmol Säuregruppen pro 1 g Polymer auf.

## Beschreibung

### Technisches Gebiet

Die vorliegende Erfindung betrifft das Gebiet der Gipszusammensetzungen, insbesondere der Dispergiermittel für Gipszusammensetzungen.

### Stand der Technik

Polymere aus α- β-ungesättigten Carbonsäuren mit Polyalkylenglykol-Seitenketten werden bereits seit längerem in der Betontechnologie als Dispergiermittel, insbesondere als Verflüssiger, wegen ihrer starken Wasserreduktion eingesetzt. Diese Polymere haben eine Kammpolymerstruktur. Es gibt eine Reihe von solchen Kammpolymeren, welche neben Ester- und Carbonsäure-Gruppen auch Amidgruppen aufweisen.

Es hat sich nun gezeigt, dass die bekannten Betondispergiermittel nur bedingt für Gipszusammensetzungen eingesetzt werden können. Die bekannten Betondispergiermittel erreichen im Gips entweder nur eine relativ geringe Verflüssigung und müssen daher in hohen Dosierungen eingesetzt werden, oder sie verzögern so stark, dass die Gipszusammensetzung kaum noch abbindet.

Als Gipsverflüssiger wurden bisher beispielsweise Melamin-Sulfonsäure-Formaldehyd Kondensate eingesetzt. Diese Verflüssiger sind jedoch wegen der Freisetzung des toxischen Formaldehyds ökologisch problematisch und daher nicht erwünscht. Andere bekannte Gipsverflüssiger basieren auf Lignin- oder Naphthalinsulfonaten, wie beispielsweise in WO02081400A1 beschrieben. Solche Verflüssiger weisen den Nachteil auf, dass sich die damit hergestellten Gipszusammensetzungen verfärben.

Insbesondere Dispergiermittel in Gipszusammensetzungen zur Herstellung von Gipsplatten erfordern bestimmte Eigenschaften, welche mit den herkömmlichen Gipsdispergiermitteln nicht erreicht werden.

### Darstellung der Erfindung

Aufgabe der vorliegenden Erfindung ist es daher, Dispergiermittel zur Verfügung zu stellen, bei denen die Nachteile des Standes der Technik überwunden werden, und welche geeignet sind, eine ausreichende Verflüssigungswirkung von Gipszusammensetzungen, insbesondere für die Herstellung von Gipsplatten, zu erzielen ohne zu stark zu verzögern.

Überraschenderweise wurde gefunden, dass dies durch die Verwendung eines Polymers **P** gemäss Anspruch 1 erreicht werden kann. Es konnte nun überraschend festgestellt werden, dass mit Polymeren, welche lange Seitenketten mit einem Molekulargewicht von mindestens 1800 g/mol und einen Säuregehalt von 1.5 bis 4, bevorzugt 1.7 bis 3.5 mmol Säuregruppen pro 1 g Polymer aufweisen, eine besonders gute Verflüssigungswirkung in Gipszusammensetzungen erreicht werden kann. Weiterhin hat sich gezeigt, dass diese Polymere zur Wasserreduktion von Gipszusammensetzungen eingesetzt werden können und dass sie das Abbinden nicht stark verzögern. Ebenfalls sind mit diesen Polymeren Zusammensetzungen möglich, die sich nicht verfärben.

Die Erfindung umfasst zudem die Verwendung von Gipszusammensetzungen umfassend mindestens ein Polymer P und vorzugsweise Calciumsulfat-β-Halbhydrat für die Herstellung von Gipsplatten. Weitere vorteilhafte Ausgestaltungen der Erfindung ergeben sich aus den Unteransprüchen.

### Wege zur Ausführung der Erfindung

Die vorliegende Erfindung betrifft die Verwendung eines Polymers **P** als Dispergiermittel für Gipszusammensetzungen, insbesondere für die Herstellung von Gipsplatten.

Das Dispergiermittel kann insbesondere verwendet werden als Verflüssiger, als Wasserreduzierer oder zur Verbesserung der Verarbeitbarkeit und der Fliessfähigkeit der damit hergestellten Gipszusammensetzungen. Solche Gipszusammensetzungen sind besonders geeignet für die Herstellung von Gipsplatten. Unter Gipsplatten werden beispielsweise Gipskartonplatten, bei denen ein Gipskern zwischen zwei Kartonplatten eingeschlossen ist, Gipsfaserplatten, welche zusätzlich Fasern enthalten, sowie Gipswandplatten, welche üblicherweise in eine Form gegossen werden, verstanden. Besonders geeignet sind die erfindungsgemässen Gipszusammensetzungen für Gipskartonplatten, bei denen ein Gipskern umfassend oder bestehend aus Calciumsulfat-β-Halbhydrat und mindestens einem Polymer **P** zwischen Kartonplatten eingeschlossen ist.

In einer besonders bevorzugten Verwendung wird das Polymer **P** als Verflüssiger für solche Gipszusammensetzungen verwendet.

Unter "Gipszusammensetzung" wird eine Zusammensetzung verstanden, welche mindestens 30 Gew.-%, bevorzugt mindestens 50 Gew.-%, noch mehr bevorzugt mindestens 70 Gew.-%, oder 100 Gew.-% Gips enthält, bezogen auf das Gesamtgewicht des Bindemittels. Bei einer bevorzugten Anwendung ist die Gipszusammensetzung zementfrei. Als Gipszusammensetzungen werden insbesondere Zusammensetzungen verstanden, welche überwiegend sulfatische Bindemittel enthalten.

Zum Term "Gips" wird jede bekannte Form von Gips gezählt, insbesondere Calciumsulfat-Dihydrat, Calciumsulfat-α-Halbhydrat, Calciumsulfat-β-Halbhydrat oder Calciumsulfat-Anhydrit oder Mischungen davon.

In einer bevorzugten Ausführungsform ist Gips Calciumsulfat-β-Halbhydrat und die Gipszusammensetzungen auf Basis von Calciumsulfat-β-Halbhydrat werden zur Herstellung von Gipsplatten verwendet. Vorzugsweise umfasst die Gipszusammensetzung mindestens 70 Gew.-% Calciumsulfat-β-Halbhydrat, noch mehr bevorzugt mindestens 90 Gew.-% Calciumsulfat-β-Halbhydrat, bezogen auf das Gesamtgewicht des Bindemittels.

Unter den Begriff "Bindemittel" fallen neben Gips weitere hydraulisch abbindende Substanzen, wie beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.

Das Polymer **P,** welches sich erfindungsgemäss besonders zur Verwendung als Dispergiermittel, insbesondere als Verflüssiger, für Gipszusammensetzungen eignet, umfasst
a) eine Hauptkette enthaltend Kohlenwasserstoffgruppen,
b) mindestens eine Seitenkette umfassend mindestens eine Säuregruppe, ausgewählt aus der Gruppe bestehend aus Carbonsäuregruppe, Sulfonsäuregruppe, Phosphonsäuregruppe, Phosphorsäuregruppe oder ein Salz davon, und
c) mindestens eine Seitenkette mit einem Molekulargewicht M_{w} von mindestens 1800 g/mol umfassend mindestens eine Polyoxyalkylengruppe, wobei die Polyoxyalkylengruppe über ein Verbindungsstück, welches mindestens eine Ester-, Amid- oder Imidgruppe, vorzugsweise mindestens eine Ester- oder Amidgruppe, umfasst, an die Hauptkette gebunden ist;
   wobei der Säuregehalt des Polymers **P** 1.5 bis 4, bevorzugt 1.7 bis 3.5, noch mehr bevorzugt 1.8 bis 2.7 mmol Säuregruppen pro 1 g Polymer beträgt.

Unter 'Molekulargewicht' oder 'Molgewicht' versteht man im Sinne der Erfindung das Molekulargewichtsmittel M_{w}.

Unter "(Meth)acrylsäure" wird im gesamten vorliegenden Dokument sowohl Acrylsäure als auch Methacrylsäure oder Mischungen davon verstanden.

Unter dem Begriff "Hauptkette enthaltend Kohlenwasserstoffgruppen" wird eine Verbindung verstanden, welche Kohlenstoffatome und Wasserstoffatome enthält. Die Kohlenwasserstoffgruppen können gesättigt oder ungesättigt sein, aliphatische, aromatische, Arylaklyl-, Alkylaryl-, lineare oder verzweigte Gruppen enthalten oder daraus bestehen. Diese Hauptkette enthaltend Kohlenwasserstoffgruppen kann beispielsweise durch radikalische Polymerisation hergestellt werden und daher je nach verwendetem Initiatorsystem und gegebenenfalls Molekulargewichtsregler an den Enden oder in der Kette eines oder mehrere Heteroatome wie beispielsweise S, O, N, P enthalten. Die Hauptkette kann aufgebaut sein aus gleichen oder unterschiedlichen Kohlenwasserstoffgruppen oder -einheiten, die abwechselnd, blockartig oder zufällig gereiht sein können. Beispiele für eine Hauptkette enthaltend Kohlenwasserstoffgruppen sind Kohlenwasserstoffketten, wie sie beispielsweise durch Polymerisation von (Meth)acrylsäure oder deren Derivaten oder durch Copolymerisation von Acrylsäure mit Methacrylsäure oder deren Derivaten oder durch Copolymerisation von Maleinsäure bzw. deren Derivaten mit Vinyl- oder Allylverbindungen entstehen, wenn man die Seitenketten, die keine reinen Kohlenwasserstoffgruppen sind, beispielsweise Säure-, Ester-, Ether- oder Amidgruppen, von der Kette entfernt. Am meisten bevorzugt ist eine Kohlenwasserstoffkette, wie sie durch Polymerisation von Acrylsäure entstanden ist.

Unter dem Begriff "Seitenkette umfassend mindestens eine Säuregruppe oder ein Salz davon" wird eine Verbindung verstanden, welche mindestens eine Carbonsäuregruppe, Sulfonsäuregruppe, Phosphonsäuregruppe, Phosphorsäuregruppe oder ein Salz davon enthält. Die Säuregruppe kann gar nicht, teilweise oder vollständig neutralisiert sein und als Salz oder Anhydrid vorliegen. Vorzugsweise ist die Säuregruppe eine Carbonsäuregruppe.

Die Seitenkette mit einem Molekulargewicht M_{w} von mindestens 1800 g/mol umfasst mindestens eine Polyoxyalkylengruppe. Die Polyoxyalkylengruppe ist vorzugsweise über ein Verbindungsstück, welches mindestens eine Ester-, Amid- oder Imidgruppe umfasst, an die Hauptkette gebunden. Das Molekulargewicht der mindestens einen Seitenkette umfassend mindestens eine Polyoxyalkylengruppe ist mindestens 1800 g/mol, vorzugsweise 2000 g/mol, noch mehr bevorzugt mindestens 3000 g/mol.

Das Verbindungsstück umfasst mindestens eine Ester-, Amid- oder Imidgruppe, vorzugsweise eine Ester- oder Amidgruppe, vorzugsweise ausgewählt aus der Gruppe bestehend aus -COO-, -CO-NH-, -R-COO-, und - R-CO-NH-, wobei R unabhängig voneinander für einen C₁ - C₆ Alkylenrest steht. Das Polymer P kann verschiedene Seitenketten umfassen welche mindestens eine Polyoxyalkylengruppe umfassen, und welche über verschiedene Verbindungsstücke an die Hauptkette gebunden sind. Beispielsweise kann das Polymer **P** Seitenketten umfassen, welche über eine Ester-, Amid- oder Imidgruppe oder Mischungen davon an die Hauptkette gebunden sind. In einem Polymer **P** können also Ester-, Amid- oder Imid-Verbindungsstücke gemischt vorkommen. Beispielsweise kann bei einem Polymer **P** ein Teil der Seitenketten umfassend mindestens eine Polyoxyalkylengruppe über eine Estergruppe und ein anderer Teil der Seitenketten umfassend mindestens eine Polyoxyalkylengruppe über eine Amidgruppe an die Hauptkette gebunden sein.
Die Polyoxyalkylengruppe enthält oder besteht vorzugsweise aus Polyoxyethylengruppen, Polyoxypropylengruppen oder Mischungen von Oxyethylen- und Oxypropylengruppen.

Um die erfindungsgemässe Wirkung zu erzielen, muss das Polymer **P** mindestens eine lange Seitenkette mit einem Molekulargewicht M_{w} von mindestens 1800 g/mol sowie einen bestimmten Säuregehalt von 1.5 bis 4, bevorzugt 1.7 bis 3.5, noch mehr bevorzugt 1.8 bis 2.7 mmol Säuregruppen pro 1 g Polymer enthalten. Der Säuregehalt des Polymers **P** wird durch die Summe der freien Säuregruppen und deren Salze in mmol, welche in 1 g Polymer **P** enthalten ist, angegeben. Als Säuregruppen werden alle Gruppen verstanden, welche eine Säure oder deren Salz enthält. Die Säuregruppe kann also auch teilweise oder vollständig neutralisiert sein.

Das Polymer **P** umfasst vorzugsweise
a) mindestens eine Säureeinheit **A** der Formel (I); 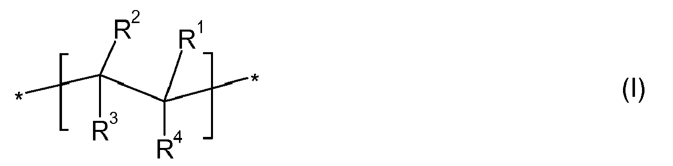
b) mindestens eine Struktureinheit **B** der Formel (II); 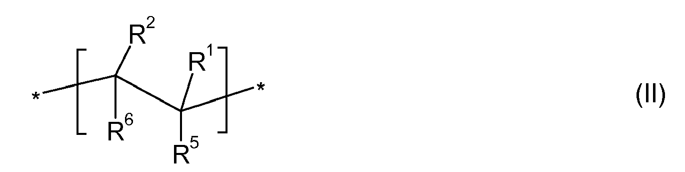 und gegebenenfalls
c) mindestens eine weitere Struktureinheit **C.**

Dabei stehen unabhängig voneinander R¹ und R² für H, COOM, CH₂COOM oder eine Alkylgruppe mit 1 bis 5 Kohlenstoffatomen, insbesondere für H; R³ steht unabhängig voneinander für H, CH₃, COOM oder CH₂COOM, insbesondere für H; und R⁴ steht unabhängig voneinander für einen Rest der Carbonsäure, Sulfonsäure, Methylsulfonsäure, Arylsulfonsäure, Carbonylamidomethylpropansulfonsäure, Phosphorsäure oder Phosphonsäure oder deren Salze. R⁴ steht insbesondere für COOM; oder R³ kann mit R⁴ einen Ring bilden zu -CO-O-CO-.

M bedeutet H, Alkalimetall, Erdalkalimetall oder andere zwei- oder dreiwertige Metallatome, Ammonium, Alkyl-Ammonium, oder eine Mischung davon. M kann insbesondere ein Kation, insbesondere H⁺, Na⁺, Ca⁺⁺/2, Mg⁺⁺/2, NH₄⁺ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber HR₃N⁺, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen tertiären Aminen erhalten.

Beispiele für geeignete Säureeinheiten **A** sind Einheiten, die durch Polymerisation entstehen von Acrylsäure, Methacrylsäure, Mesaconsäure, Citraconsäure, Glutactonsäure, Fumarsäure, Maleinsäure, Maleaminsäure, Itaconsäure, Vinylbenzoesäure, Crotonsäure, Vinylsulfonsäure, Allylsulfonsäure, Methallylsulfonsäure, 2-Acrylamido-2-methylpropan-sulfonsäure oder Vinylphosphonsäure, oder Derivate oder Analoga davon, wie beispielsweise das Maleinsäurehalbamid aus Maleinsäure und Sulfanilsäure, insbesondere das N-(4-Sulfophenyl)maleinsäureamid. Bevorzugt sind Monocarbonsäuren. Insbesondere geeignet als Säureeinheit **A** ist eine Einheit, entstanden durch Polymerisation einer Acrylsäureeinheit oder ein Salz davon.

Vorzugsweise ist die mindestens eine Säureeinheit **A** der Formel (I) teilweise oder vollständig neutralisiert. Die Säureeinheit kann als freie Säure oder auch als Salz oder Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Besonders bevorzugt ist ein Polymer **P,** bei dem R¹, R² und R³ für H, R⁴ für COOM und M für H oder ein Alkali- oder Erdalkalimetall stehen. Die Säureeinheit **A** der Formel (I) stellt somit vorzugsweise eine Acrylsäureeinheit oder Salze davon dar.

R⁶ steht unabhängig voneinander für H, CH₃, COOM oder CH₂COOM oder einen Substituenten wie für R⁵ definiert, vorzugsweise für H.

R⁵ steht unabhängig voneinander für einen Rest der Formel (III)

-(CH₂)ₓ-R⁷-(R⁸O)_{y}-R⁹ (III)

Dabei steht R⁷ für ein Ester-, Amid oder Imid-Verbindungsstück, vorzugsweise für -COO- oder -CO-NH-. R⁸ steht für eine C₂ - C₆ Alkylengruppe, vorzugsweise eine C₂ - C₄ Alkylengruppe oder eine Mischung von C₂, C₃ und/oder C₄ Alkylengruppen in einer beliebigen Reihenfolge; und R⁹ steht für H, einen C₁ - C₁₂ Alkyl- oder Cycloalkylrest, einen C₇ - C₂₀ Alkylaryl-oder Aralkylrest, oder einen substituierten oder unsubstituierten Arylrest, oder einen einwertigen organischen Rest mit 1 bis 30 C-Atomen, welcher gegebenenfalls Heteroatome umfasst.

Der Index x weist unabhängig voneinander den Wert 0 oder 1 auf; und y steht unabhängig voneinander für den Wert 40 - 250, vorzugsweise für 60 bis 120.

In einer bevorzugten Ausführungsform steht R⁵ für -COO-(R⁸O)_{y}-R⁹ oder -CO-NH-(R⁸O)_{y}-R⁹, insbesondere für -COO-(R⁸O)_{y}-R⁹, und -(R⁸O)_{y}-steht für eine C₂ - C₄ Polyoxyalkylengruppe, insbesondere für eine Polyoxyethylengruppe oder eine Polyoxypropylengruppe oder Mischungen von Oxyethylen- und Oxypropyleneinheiten in irgendeiner möglichen Sequenz, beispielsweise zufällig, alternierend oder blockweise, und y steht für 40 bis 250, bevorzugt für 45 bis 120. Bei einem bevorzugten Polymer **P** sind mindestens 30 Mol-%, besonders bevorzugt 50 - 100 Mol-%, noch mehr bevorzugt 80 - 100 Mol-%, am meisten bevorzugt 100 Mol-% der Struktureinheit **B** der Formel (II) durch eine Struktur dargestellt bei der R⁸ eine C₂-Alkylengruppe darstellt. Das heisst, R⁵ umfasst vorzugsweise mindestens 30 Mol-% (C₂H₄O)-Einheiten, vorzugsweise 50 bis 100 Mol-% (C₂H₄O)-Einheiten, noch mehr bevorzugt 80 bis 100 Mol-% (C₂H₄O)-Einheiten, bezogen auf die Gesamtmolmenge aller (R⁸O)-Einheiten. Insbesondere bevorzugt umfasst R⁵ 100 Mol-% (C₂H₄O)-Einheiten, bezogen auf die Gesamtmolmenge aller (R⁸O)-Einheiten. R⁹ kann je nach Herstellverfahren des Polymers P für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, stehen. Wird das Polymer **P** über die polymeranaloge Reaktion hergestellt, ist R⁹ vorzugsweise ein Methylrest, und steht nicht für ein Wasserstoffatom.

Die weitere Struktureinheit C kann eine weitere Ether-, Ester, Amid-oder Imideinheit, vorzugsweise eine Amid- oder Estereinheit umfassen. Beispielsweise kann die weitere Struktureinheit C Carbonsäure-, Sulfonsäure-, Phosphorsäureester-, Phosphonsäure-, Carbonylamidomethylpropansulfonsäure und deren Alkali oder Erdalkalisalze, Poly(oxyalkylen)oxycarbonyl, Poly(oxyalkylen)aminocarbonyl, Poly(oxy-alkylen)oxyalkyl-, Poly(oxyalkylen)oxy-, Hydroxyethyloxycarbonyl-, Acetoxy-, Phenyl- oder N-Pyrrolidonylgruppen umfassen. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit C eine Estereinheit sein, welche durch Umsetzung einer Mono- oder Dicarbonsäure mit einem Alkylalkohol, insbesondere einem C₆-C₂₀ Alkylalkohol hergestellt wird.

Es hat sich gezeigt, dass eine überraschend gute Verflüssigungswirkung in Gipszusammensetzungen erzielt wird, wenn das Polymer **P** lange Seitenketten mit einem Molekulargewicht von mindestens 1800 g/mol und einen Säuregehalt von 1.5 bis 4, bevorzugt 1.7 bis 3.5 mmol Säuregruppen pro 1 g Polymer aufweist.

Ein besonders bevorzugtes Polmyer **P** umfasst oder besteht aus
a) mindestens einer Säureeinheit **A** der Formel (I'); 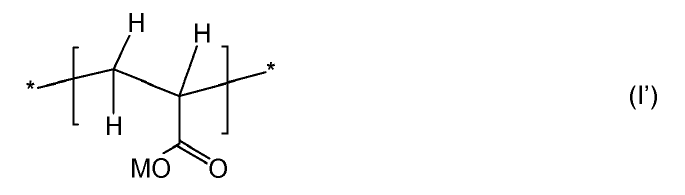 und
b) mindestens einer Struktureinheit B der Formel (II'); 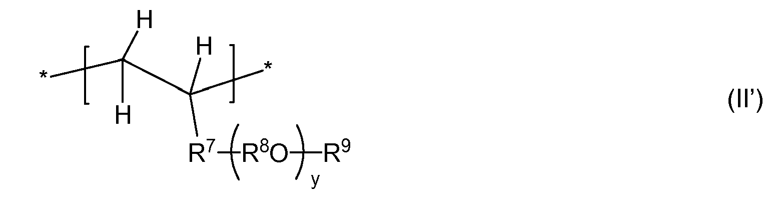 wobei M ein H⁺, Na⁺, Ca⁺⁺/2, Mg⁺⁺/2, NH₄⁺ oder ein organisches Ammonium, vorzugsweise ein H⁺ darstellt,
   wobei R⁷ für COO oder CONH steht,
   wobei R⁸ für eine Ethylengruppe steht,
   wobei R⁹ für eine C₁ bis C₁₂ Alkylgruppe, vorzugsweise eine Methylgruppe steht,
   wobei y für 40 - 250, vorzugsweise 60 bis 100 steht,
   und wobei der Säuregehalt 1.5 bis 4, bevorzugt 1.7 bis 3.5 mmol COOM-gruppen pro 1 g Polymer beträgt.

Das Polymer **P** kann eine Kombination von verschiedenen Struktureinheiten der jeweiligen Struktureinheiten von **A, B,** und gegebenenfalls **C** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Bevorzugt sind aber reine Acrylsäureeinheiten. Oder es können mehrere unterschiedliche Ester- oder Amideinheiten **B** gemischt im Polymer **P** vorkommen, so zum Beispiel mehrere Estereinheiten **B** mit verschiedenen Substituenten R⁸. Bevorzugt ist beispielsweise die gemeinsame Verwendung von Polyalkylenglykolen, insbesondere von Polyethylenglykolen mit Polypropylenglykolen, oder die gemeinsame Verwendung von Polyalkylenglykolen, insbesondere von Polyethylenglykolen, mit unterschiedlichem Molekulargewicht.

In einer bevorzugten Ausführungsform umfasst das Polymer **P** 50 bis 99.5 Mol-%, vorzugsweise 70 bis 99 Mol-% der Säureeinheit **A** der Formel (I), 0.5 bis 50 Mol-%, vorzugsweise 1 bis 30 Mol-% der Struktureinheit **B** der Formel (II), und gegebenenfalls 0 bis 49 Mol-% der Struktureinheit **C,** jeweils bezogen auf die Gesamtmolmenge der Struktureinheiten von **A, B** und **C** im Polymer **P.**

Besonders bevorzugt umfasst das Polymer **P** 75 bis 98 Mol-%, noch mehr bevorzugt 85 bis 98 Mol-%, der Säureeinheit **A** der Formel (I), 2 bis 25 Mol-%, noch mehr bevorzugt 2 bis 15 Mol-%, der Struktureinheit **B** der Formel (II), und gegebenenfalls 0 bis 23 Mol-% der Struktureinheit **C,** jeweils bezogen auf die Gesamtmolmenge der Struktureinheiten von **A, B** und **C** im Polymer **P.**

Die Abfolge der einzelnen Struktureinheiten **A, B,** und **C** im Polymer **P** kann alternierend, statistisch, blockweise oder zufällig sein.

Das Polymer **P** weist vorzugsweise ein Molekulargewicht M_{w} im Bereich von 10'000 - 150'000 g/mol, vorzugsweise 15'000 - 100'000 g/mol, besonders bevorzugt 25'000-80'000 g/mol, auf.

Das Polymer **P** kann auf verschiedene Arten hergestellt werden. Es sind im Wesentlichen zwei Verfahren im Einsatz. In einem ersten Verfahren werden die Polymere in einer sogenannten polymeranalogen Umsetzung aus einem Polycarboxylat und den jeweiligen Alkoholen und/oder Aminen hergestellt. In einem zweiten Verfahren werden die Polymere aus den jeweiligen ungesättigten Carbonsäure-, und Ester- und/oder Amidfunktionenellen Monomeren durch radikalische Polymerisation hergestellt.

Besonders bevorzugte Polymere werden nach der polymeranalogen Reaktion gemäss dem ersten Verfahren hergestellt. Die polymeranaloge Umsetzung weist den grossen Vorteil auf, dass aus kommerziell erhältlichen Polymeren aus α-,β-ungesättigten Säuren, insbesondere aus Mono- oder Dicarbonsäuren, speziell aus Poly(meth)acrylsäuren, durch Variation der Menge, der Art und dem Verhältnis von Alkohol und Amin, in einfacher und sicherer Weise sehr unterschiedliche Kammpolymere mit sehr unterschiedlichen Eigenschaften erhalten werden können. Solche polymeranalogen Umsetzungen sind beispielsweise in WO97/35814A1, WO95/09821A2, DE 100 15 135A1, EP 1138697A1, EP1348729A1 sowie WO2005/090416A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polymer **P** kann auch in festem Aggregatszustand erhalten werden, wie in EP 1 348 729 A1 auf Seite 3 bis Seite 5 sowie in dessen Beispielen beschrieben.

Es wird also bevorzugt ein Polymer **P** verwendet, wobei das Polymer **P** erhältlich ist durch die Reaktion von (a) mindestens einer Polycarbonsäure oder einem Analogon einer Polycarbonsäure; und (b) mindestens einer Monohydroxyverbindung **E** und/oder mindestens einer Monoaminverbindung **F** umfassend mindestens eine Polyoxyalkylengruppe, und gegebenenfalls (c) mindestens eine weitere Verbindung **D.**

Unter Polycarbonsäure oder Analogon einer Polycarbonsäure versteht man ein Homo- oder Copolymer, welches durch Polymerisation von mindestens einem Monomer **a** und gegebenenfalls mindestens einem Monomer **b** erhalten werden kann. Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Unter Analogon einer Mono-oder Dicarbonsäure oder Polycarbonsäure versteht man im Sinne der vorliegenden Erfindung Säuresalze, Säurehalogenide, Säureanhydride und Säureester, im besonderen Alkyl-Säureester.

Monomer **b** ist vorzugsweise ausgewählt aus der Gruppe von ethylenisch ungesättigten Monomeren umfassend α-β-ungesättigte Mono-oder Dicarbonsäuren, α-β-ungesättigte Mono- oder Dicarbonsäureester, α-βungesättigte Carboxylate, Styrol, Ethylen, Propylen, Vinylacetat insbesondere Methacrylsäure, Acrylsäure, Crotonsäure, Itaconsäure, Maleinsäure, Fumarsäure, sowie deren Salze, Ester und Mischungen davon.

Bevorzugt als Copolymer ist ein Copolymer aus Acrylsäure und Methacrylsäure sowie deren Salze oder Teilsalze.

Bevorzugt als Homopolymer ist Polyacrylsäure, deren Salze oder Teilsalze.

Die Polycarbonsäure oder das Analogon der Polycarbonsäure kann hierbei als freie Säure oder als Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Bei der Herstellung der Polycarbonsäure oder des Analogons der Polycarbonsäure sind allenfalls verwendete Initiatoren, CoInitiatoren und Polymerisationsregler gegebenenfalls so zu wählen, dass in Polymer **P** vorzugsweise keine reaktionsfähigen Hydroxyl- oder Aminfunktionen vorhanden sind.

Unter "Monohydroxy-Verbindung" wird hier und im folgenden eine Substanz verstanden, die nur eine freie Hydroxylgruppe aufweist.

Unter "Monoamin-Verbindung" wird hier und im folgenden eine Substanz verstanden, die nur eine freie Aminogruppe aufweist.

Das Homo- oder Copolymer der Polycarbonsäure oder des Anologons der Polycarbonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Die Polymerisation erfolgt vorteilhaft unter derartigen Bedingungen, dass das gebildeten Homo- oder Copolymere aus 10 bis 250, bevorzugt 20 bis 100, mehr bevorzugt 25 bis 60, Monomerbausteinen aufgebaut ist. Solche Homo-oder Copolymere von (Meth)acrylsäure sind kommerziell erhältlich. Das Homo-oder Copolymer der Polycarbonsäure oder des Anologons der Polycarbonsäure weist vorzugsweise ein Molekulargewicht M_{w} von 500 bis 20'000 g/mol, bevorzugt von 2'000 bis 10'000 g/mol, insbesondere bevorzugt von 3'500 bis 6'500 g/mol, auf.

Die Monohydroxy-Verbindung **E** ist vorzugsweise mit unter üblichen Reaktionsbedingungen nicht reaktiven Endgruppen einseitig abgeschlossen. Bevorzugt handelt es sich hierbei um ein Polymer mit einem Polyalkylenglykol-Grundgerüst. Die Monohydroxy-Verbindung **E** weist die Formel (IV) auf

HO-(R⁸O)_{y}-R^{9'} (IV)

wobei R⁸ unabhängig voneinander eine C₂ - C₄ Alkylengruppe bedeutet mit einer Reihenfolge der (R⁸O)-Einheiten in irgendeiner möglichen Sequenz; wobei R^{9'} für einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei y unabhängig voneinander für 40 - 250, vorzugsweise 45 bis 120 steht.

Bevorzugt sind Monohydroxy-Verbindungen **E** der Formel (IV) mit einer Methyl-, Ethyl-, i-Propyl- oder n-Butylgruppe, insbesondere mit einer Methylgruppe, als Substituent R9^{'}. Vorzugsweise steht R⁸ unabhängig voneinander für eine C₂-Alkylengruppe und/oder eine C₃-Alkylengruppe. Bevorzugt handelt es sich bei **E** um Mischpolymerisate aus Ethylenoxid/Propylenoxid, mehr bevorzugt um einseitig endgruppenverschlossenes Polyethylenglykol.

Mischungen mehrerer unterschiedlicher Verbindungen der Gruppe **E** sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymeren aus Ethylenoxid und Propylenoxid oder einseitig endgruppenverschlossenen Polypropylenglykolen verwendet werden.

Unter 'mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei 'einseitig abgeschlossen' Verbindungen ist nur eine Seite nicht mehr zur Reaktion fähig.

In einer bevorzugten Ausführungsform ist die Monohydroxy-Verbindung **E** ein einseitig endgruppenverschlossenes Polyalkylenglykol mit einem Molekulargewicht M_{w} von 1800 bis 10'000 g/mol, insbesondere von 2000 bis 8000 g/mol, bevorzugt von 2000 bis 6000 g/mol. Geeignet ist auch eine Mischung von einseitig endgruppenverschlossenen Polyalkylenglykolen mit unterschiedlichem Molekulargewicht, beispielsweise die Mischung von Polyalkylenglykolen mit einem Molekulargewicht von 1'000 g/mol mit Polyalkylenglykolen mit einem Molekulargewicht von 5'000 g/mol.

Zusätzlich zur Monohydroxy-Verbindung **E** oder anstelle der Monohydroxy-Verbindung **E** kann im ersten und gegebenenfalls im zweiten Verfahren eine Monoaminverbindung **F** eingesetzt werden. Dadurch erfolgt die Bildung von Amidgruppen. Weiterhin enthält die Monoaminverbindung **F** vorzugsweise keine Hydroxylgruppen.

Typische Beispiele solcher Monoaminverbindungen **F** lassen sich durch die Formel (V) darstellen

NH₂-(R⁸O)_{y}-R^{9'} (V)

Die Substituenten R⁸ und R^{9'} beziehungsweise der Index y weisen unabhängig voneinander dieselben Bedeutungen auf wie sie bereits für die Formel (IV) definiert wurden.

Beispiele für solche Monoaminverbindungen **F** sind α-Methoxy-ω-Amino-Polyoxyethylen, α-Methoxy-ω-Amino-Polyoxypropylen, α-Methoxy-ω-Am ino-Oxyethylene-Oxypropylen-Copolymer.

Besonderes bevorzugt als Monoaminverbindungen **F** sind α-Methoxy-ω-Amino-Oxyethylen-Oxypropylen-Copolymere, wie beispielsweise Jeffamin® M-2070, oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/oder Propylenoxid gefolgt von Umwandlung der terminalen Alkoholgruppe in eine Amingruppe

Als weitere Verbindung **D** ist eine Verbindung bevorzugt, welche mit der Polycarbonsäure oder dem Analogon der Polycarbonsäure eine Reaktion eingehen kann. Beispiele für eine Verbindung **D** sind weitere Amine oder Alkohole, beispielsweise ein C₆-C₂₀ Alkylalkohol oder ein weiteres Mono- oder Diamin. Es können auch mehrere verschiedene Verbindungen **D** eingesetzt werden.

Die Umsetzung der Polycarbonsäure oder dem Analogon der Polycarbonsäure mit mindestens einer Monohydroxy-Verbindung **E** und/oder mit mindestens einer Monoaminverbindung **F,** und gegebenenfalls einer Verbindung **D** zu einem Polymer **P** erfolgt bei der polymeranalogen Reaktion typischerweise derart, dass zur Polycarbonsäure oder dem Analogon der Polycarbonsäure unter Rühren die mindestens eine Monohydroxy-Verbindung **E** und/oder die mindestens eine Monoaminverbindung **F** zugegeben wird und auf die Umsetzungstemperatur aufgeheizt wird. Die Mischung wird bei der oben beschriebenen Umsetzungstemperatur weitergerührt und eventuell unter Vakuum oder durch Über- oder Durchleiten eines Gasstromes über beziehungsweise durch die Reaktionsmasse umgesetzt. Die Temperatur für diese Umsetzung ist beispielsweise zwischen 140°C und 200°C. Die Reaktion ist aber auch bei Temperaturen zwischen 150°C und 175°C möglich. Falls zusätzlich zur Monohydroxy-Verbindung **E** eine Monoaminverbindung **F** eingesetzt wird, kann deren Zugabe gleichzeitig mit der Monohydroxy-Verbindung **E** oder aber zu einem späteren Zeitpunkt während dieses Reaktionsschrittes erfolgen.

In einer bevorzugten Ausführungsform wird diese Umsetzung in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.

Die Umsetzung kann mittels Messung der Säurezahl, beispielsweise durch Titration, verfolgt werden und bei einer gewünschten Säurezahl, so dass der gewünschte Säuregehalt erreicht wird, abgebrochen werden. Die Reaktion wird durch Aufheben des Vakuums und Abkühlen abgebrochen.

In einer bevorzugten Ausführungsform wird eine Polyacrylsäure mit einem Polyethylenglykol welches einseitig mit einer Methylgruppe abgeschlossen ist, verestert und/oder mit einem Monoamin umgesetzt.

In einem zweiten Herstellverfahren wird das Polymer **P** über die radikalische Polymerisation hergestellt. Der Weg über die radikalische Polymerisation ist die gängigste Methode, sie ist allerdings bei speziellen Verbindungen erschwert durch die kommerzielle Verfügbarkeit der entsprechenden Monomere und bedarf einer aufwändigen Prozesskontrolle.

Die Erfindung betrifft daher zusätzlich die Verwendung eines Polymers **P** als Dispergiermittel, insbesondere als Verflüssiger, für Gipszusammensetzungen, wobei das Polymer **P** erhältlich ist durch die Polymerisationsreaktion in Gegenwart von mindestens einem Radikalbildner von
(a) mindestens einem ethylenisch ungesättigten Monomer **M,** welches ausgewählt ist aus der Gruppe bestehend aus ungesättigten Mono- oder Dicarbonsäuren, ungesättigten Sulfonsäuren, ungesättigten Phosphorsäuren, ungesättigten Phosphonsäuren oder deren Salze; mit
(b) mindestens einem ethylenisch ungesättigten Carbonsäurederivat **H** der Formel (VI); 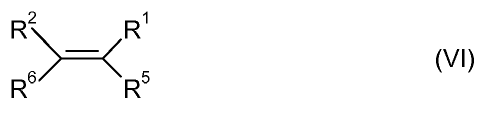 und gegebenenfalls
(c) mindestens einer weiteren ethylenisch ungesättigten Verbindung L.

Die Substituenten R¹, R², R⁵, und R⁶ weisen unabhängig voneinander je dieselben Bedeutungen auf, wie sie bereits für die Formel (II) beschrieben wurden.

Das ethylenisch ungesättigte Monomer **M** ist vorzugsweise eine Mono-oder Dicarbonsäure oder das Salz der ungesättigten Mono- oder Dicarbonsäure. Vorzugsweise ist die Mono- oder Dicarbonsäure Acrylsäure oder Methacrylsäure, Maleinsäure, Itaconsäure, Fumarsäure, Citraconsäure, Glutaconsäure, Mesaconsäure oder Crotonsäure, insbesondere Acrylsäure oder Methacrylsäure. Besonders bevorzugt ist die Acrylsäure.

Das mindestens eine ethylenisch ungesättigte Carbonsäurederivat **H** der Formel (VI) ist vorzugsweise ein Carbonsäureester oder ein Carbonsäureamid, besonders bevorzugt ein Acrylsäureester oder ein Methacrylsäureester. Bevorzugte Beispiele für solche Ester sind Polyalkylenglykolacrylate. Es können mehrere Monomere der Formel (VI) mit verschiedenen Substituenten R⁵ in Kombination miteinander verwendet werden. Bevorzugt ist beispielsweise die gemeinsame Verwendung von Polyalkylenglykolen, insbesondere von Polyethylenglykolen, mit unterschiedlichem Molekulargewicht. Beispiele für geeignete Carbonsäureamide können Amide von ethylenisch ungesättigten Mono- oder Dicarbonsäuren mit Aminverbindungen sein. Besonders bevorzugt sind Amide der (Meth)acrylsäure, vorzugsweise die Polyoxyalkylenmonoamide. Besonders bevorzugte Amid-Monomere sind die Alkylpolyalkylenglycol(meth)acrylamide, besonders bevorzugt die Methylpolyethylenglycol(meth)acrylamide, die Methylpolyethylenglycolpolypropylenglycol(meth)acrylamide oder die Methylpolypropylenglycol(meth)acrylamide. Weitere Beispiele sind vorzugsweise Mono- oder Di-hydroxyethyl(meth)acrylamid, Mono- oder Dihydroxypropyl(meth)acrylamid, Mono- oder Di-cyclohexyl(meth)acrylamid oder N-Alkyl,-N-hydroxyethyl(meth)acrylamide oder N-Alkyl,-N-hydroxypropyl(meth)acrylamide. Es können ein oder mehrere dieser ungesättigten Carbonsäureamide verwendet werden.

Die weitere ethylenisch ungesättigte Verbindung **L** ist vorzugsweise ein Carbonsäureester oder -amid, besonders bevorzugt **ein** Acrylsäureester- oder amid oder ein Methacrylsäureester oder amid. Beispiele für solche Ester oder Amide sind Polyoxyalkylen(meth)acrylate. Es können mehrere verschiedene Verbindungen L in Kombination miteinander verwendet werden. Geeignet ist beispielsweise die gemeinsame Verwendung von verschiedenen Poly(oxyalkylenen), insbesondere von Poly(oxyethylen) mit Poly(oxypropylen), oder die gemeinsame Verwendung von Poly(oxyalkylenen) mit unterschiedlichem Molekulargewicht.

Das Polymer **P** kann zur erfindungsgemässen Verwendung sowohl in flüssiger als auch in fester Form, sowohl allein oder als Bestandteil eines Dispergiermittels, insbesondere eines Verflüssigers verwendet werden.

Das Polymere **P** kann somit für die erfindungsgemässe Verwendung als Dispergiermittel für Gipszusammensetzungen als einfaches Polymer **P** oder als Mischungen mehrerer Polymere **P** verwendet werden. Es können aber auch Polymere **P** mit anderen Dispergiermitteln oder Dispergiermittelmischungen verwendet werden. Die Polymere **P** oder Mischungen, die die Polymere **P** enthalten, können zur erfindungsgemässen Verwendung weitere Bestandteile enthalten. Beispiele für weitere Bestandteile sind Lösungsmittel oder Additive, wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner.

Je nach Herstellverfahren oder Reaktionsführung kann das Dispergiermittel zudem zusätzlich zum Polymer **P** freie Verbindungen der Ausgangsstoffe, insbesondere freie Monohydroxyverbindungen wie beispielsweise Polyalkylenglykol, insbesondere freies Polyethylenglykol, enthalten.

Falls das Polymer **P** in flüssiger Form verwendet wird, wird für die Umsetzung vorzugsweise ein Lösungsmittel eingesetzt. Bevorzugte Lösungsmittel sind beispielsweise Alkohole, insbesondere Ethanol oder Isopropanol, und Wasser, wobei Wasser das am meist bevorzugte Lösungsmittel ist.

Das Polymer **P** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen.

Das Polymer **P** wird bevorzugt in einer Menge von 0.01 bis 10 Gew.-% bezogen auf das Gewicht des Bindemittels verwendet, um in der Gipszusammensetzung die gewünschte Wirkung zu erzielen. Es können auch mehrere Polymere **P** gemischt verwendet werden, um die gewünschte Wirkung zu erzielen.

In einem weiteren Aspekt betrifft die vorliegende Erfindung ein Bindemittel enthaltendes Gemisch umfassend Gips und mindestens ein Polymer **P.** Das Polymer **P** wurde bereits vorgängig beschrieben.

Zum Term "Gips" wird jede bekannte Form von Gips gezählt, insbesondere Calciumsulfat-Dihydrat, Calciumsulfat-α-Halbhydrat, Calciumsulfat-β-Halbhydrat oder Calciumsulfat-Anhydrit. Besonders geeignet ist das Polymer **P** zur Verwendung in einem Bindemittel enthaltenden Gemisch umfassend Calciumsulfat-β-Halbhydrat zur Verwendung in Gipsplatten, insbesondere für Gipskartonplatten.

Das Bindemittel enthaltende Gemisch enthält mindestens 30 Gew.-%, bevorzugt mindestens 50 Gew.-%, am meisten bevorzugt mindestens 70 Gew.-%, Gips, insbesondere Calciumsulfat-β-Halbhydrat, bezogen auf das Gesamtgewicht des Bindemittels. Das Bindemittel kann weitere hydraulisch abbindende Substanzen enthalten, wie beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.

Weiterhin kann das Gemisch weitere Zusätze, wie beispielsweise Fasern, sowie als Additive übliche Bestandteile wie beispielsweise andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Stärke, Zucker, Silikone, Schwindreduzierer, Entschäumer, oder Schaumbildner enthalten.

Besonders bevorzugt ist ein Bindemittel enthaltendes Gemisch umfassend ein Polymer **P,** Calciumsulfat-β-Halbhydrat und mindestens einen Beschleuniger, sowie weitere Zusätze wie sie für die Herstellung einer Gipsplatte üblich sind.

In einem weiteren Aspekt betrifft die vorliegende Erfindung ein Verfahren zur Herstellung eines Bindemittels enthaltenden Gemisches wobei das mindestens eine Polymer **P** getrennt oder als Zusatzmittel vorgemischt in fester oder flüssiger Form dem Bindemittel zugegeben wird.

Das Polymer **P** kann im festen Aggregatszustand ein Bestandteil einer Gipszusammensetzung, einer sogenannten Trockenmischung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Polymer **P** kann auch einer üblichen Gipszusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers. Die Herstellung der wässrigen Lösung oder Dispersion erfolgt durch Zusetzen von Wasser bei der Herstellung des Polymers **P** oder durch nachträgliches Vermengen von Polymer **P** mit Wasser. Typischerweise beträgt dabei der Anteil des Polymeren **P** 10 bis 90 Gewichts-%, insbesondere 20 bis 50 Gew.-%, bezogen auf das Gewicht der wässrigen Lösung oder Dispersion. Je nach Art des Polymers **P** entsteht eine Dispersion oder eine Lösung. Bevorzugt wird eine Lösung.

Die wässrige Lösung oder Dispersion kann weitere Bestandteile enthalten. Beispiele hierfür sind Lösungsmittel oder Additive, wie sie in der Bauchemie geläufig sind, insbesondere oberflächenaktive Stoffe, Stabilisatoren gegen Hitze und Licht, Farbstoffe, Entschäumer, Beschleuniger, Verzögerer, Schaumbildner.

Das Polymer **P** verfügt über besonders gute Eigenschaft als Dispergiermittel, insbesondere als Verflüssiger, für Gipsuzammensetzungen, insbesondere für Zusammensetzungen umfassend Calciumsulfat-β-Halbhydrat zur Verwendung in Gips-Platten. Das heisst, dass die resultierende Mischung ein bedeutend grösseres Fliessverhalten aufweist im Vergleich zu einer Zusammensetzung ohne das Dispergiermittel, ohne dass das Erstarren deutlich verzögert wird. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten Gipszusammensetzung stark erhöht sind, und dass eine Prozessverbesserung bei der Herstellung der Gipszusammensetzungen, insbesondere der Gipsplatten, erreicht wird, da beispielsweise Zeit und Energie beim Trocknen der Gipsplatten gespart werden kann.

Das Polymer **P** hat somit als Dispergiermittel, insbesondere als Verflüssiger, hervorragende Eigenschaften in Systemen, welche überwiegend sulfatische Bindemittel, insbesondere überwiegend Calciumsulfat-β-Halbhydrat, enthalten. Zudem sind mit dem Polymer **P** Zusammensetzungen möglich, die sich nicht verfärben.

### Beispiele

Die Erfindung wird nun anhand von Beispielen näher erläutert.

### 1. Verwendete Polymere P

**Tabelle 1 Verwendete Abkürzungen. ^{*}Mw = mittleres Molekulargewicht**

| **Abkürzung** | **Bedeutung** | **Mw^{*}** |
|---|---|---|
| PEG1000 | Polyethylenglykol ohne terminale OH-Gruppen | 1000 g/mol |
| PEG3000 | Polyethylenglykol ohne terminale OH-Gruppen | 3000 g/mol |
| PEG5000 | Polyethylenglykol ohne terminale OH-Gruppen | 5000 g/mol |
| EO/PO(70/30)2000 | Block-Copolymer aus Ethylenoxid und Propylenoxid im Verhältnis 70:30 ohne terminale OH-Gruppen | 2000 g/mol |

Es wurden die in Tabelle 2 angegebenen Polymere **P-1, P-2** und **P-3** sowie die Vergleichsbeispiele **V1**, **V2** und **V3** mittels polymeranaloger Umsetzung aus Polyacrylsäure mit den korrespondierenden Alkoholen und/oder Aminen nach bekannter Art und Weise hergestellt. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen.

So wurde beispielsweise Polymer **P-2** mittels polymeranaloger Umsetzung folgendermassen hergestellt:

In einen Rundkolben mit mechanischem Rührer (IKA®-Rührwerk), Thermometer, Gaseinleitrohr und Destillationsbrücke wurden 145 g einer 40-prozentigen wässrigen Lösung (entspricht etwa 1 Mol Säureeinheiten) von Polyacrylsäure (PAS, mit einem mittleren Molekulargewicht M_{w} von etwa 5000 g/mol) vorgelegt. Die Mischung wurde auf 50°C erwärmt und 300 g Polyethyleneglykol-Monomethylether (MPEG, mit einem mittleren Molekulargewicht M_{w} von etwa 5000 g/mol) und 4 g Jeffamine® M-2070 zugegeben. Die Reaktionsmischung wurde unter N₂-Strom auf 175°C erwärmt. Das in der Mischung enthaltene Wasser sowie das Reaktionswasser wurden kontinuierlich unter N₂-Strom abdestilliert. Mit Erreichen der Temperatur wurden 3 g einer 66%igen Kalium-Acetat-Lösung zur Reaktionsmischung gegeben und ein Vakuum von 80 mbar angelegt. Nach 2 ½ Stunden ist ein vollständiger Reaktionsumsatz erreicht. Die Polymerschmelze wurde erstarren gelassen oder aber nach dem Abkühlen auf <100°C mit 550 g Wasser versetzt, um eine 40%ige Polymerlösung zu erhalten.

Die Polymere **P-1** und **P-3** sowie die Vergleichsbeispiele **V1 - V3** wurden in gleicher Weise wie Polymer **P-2** hergestellt.

Vergleichsbeispiel **V-4** ist ein kommerziell erhältlicher, auf Melamin Basis hergestellter Verflüssiger (beipsielsweise Melment® F15G von BASF). Vergleichsbeispiel **V-5** ist ein kommerziell erhältlicher, auf Naphthalinsulfonat-Basis hergestellter Verflüssiger (beispeilsweise Superplastyfikator CA40 von PCC Rokita SA, Polen). Beim sechsten Vergleichsbeispiel wurde kein Verflüssiger verwendet.

**Tabelle 2 Erfindungsgemässe Polymere P-1, P-2 und P-3 bzw. Vergleichspolymere V-1 bis V-3 enthalten die Struktureinheiten A der Formel (I) und die Struktureinheiten B der Formel (II) mit R²=H, R³=H, R⁴=COOM, R⁶=H, M= H⁺, Na⁺,**

| **Nr.** | **R¹** | **R⁵** | | **Mw** | ***Säuregehalt in mmol*/ *1g Polymer*** |
|---|---|---|---|---|---|
| **P-1** | -H | -COO-PEG1000-CH3: | 41: | 50'000 | 1.864 |
| | | -COO-PEG5000-CH3: | 57.4: | | |
| | | -CO-NH-EO/PO(70/30)2000-CH3 | 1.6* | | |
| **P-2** | -H | -COO-PEG5000-CH3: | | 44'000 | 2.527 |
| **P-3** | -H | -CO-NH-EO/PO(70/30)2000-CH3 | | n.b. | 2.711 |
| **V-1** | -H | -COO-PEG1000-CH3: -CO-NH-EO/PO(70/30)2000-CH3 | 98.4: 1.6* | 31'500 | 4.583 |
| **V-2** | -H | -COO-PEG3000-CH3: -CO-NH-EO/PO(70/30)2000-CH3 | 99.5: 0.5* | 57'000 | 0.556 |
| **V-3** | -H | -COO-PEG1000-CH3: -CO-NH-EO/PO(70/30)2000-CH3 | 99.5: 0.5* | 37'000 | 1.481 |

| | | | | | |
|---|---|---|---|---|---|
| * bedeutet Molverhältnis der verschiedenen R⁵ Seitenketten n.b. bedeutet nicht bekannt | | | | | |

### 2. Fliessverhalten im Calciumsulfat-β-Halbhydrat

Für einen Gipsslurry wurden 140 g Wasser mit 1 g einer 40-% igen Verflüssigerlösung (entspricht 0.2 Gew.-% Verflüssiger bezogen auf das Gesamtgewicht des Calciumsulfat-β-Halbhydrat) vorgelegt. Dann wurden 200 g Calciumsulfat-β-Halbhydrat, gegebenenfalls 0.2 g (0.1 Gew.-% bezogen auf das Gesamtgewicht des Calciumsulfat-β-Halbhydrates) eines Beschleunigers aus Calciumsulfat-Dihydrat, (beispielsweise erhältlich bei Fluka), beziehungsweise 4 g (2 Gew.-% bezogen auf das Gesamtgewicht des Calciumsulfat-β-Halbhydrates) eines Beschleunigers aus Kaliumsulfat (Fluka) enthaltend innerhalb von 15 Sekunden in das Wasser eingestreut und der Gipsslurry 15 Sekunden sumpfen gelassen. Anschliessend wurde 30 Sekunden von Hand intensiv gerührt. Der Minikonus mit einem Durchmesser von 50mm und einer Höhe von 51 mm wurde gefüllt und nach 75 Sekunden das Ausbreitmass (ABM) in Millimeter bestimmt. Der Durchmesser des sich bildenden Gipskuchens wurde gemessen, sobald kein Fliessen mehr beobachtet wurde. Der Durchmesser in mm wurde als Ausbreitmass bezeichnet. Der Versteifungsbeginn und das Versteifungsende wurden mit der Messerschnittmethode nach DIN EN 13279-2 und der Daumendruckmethode bestimmt. Der Versteifungsbeginn (VB) ist erreicht, wenn nach einem Messerschnitt durch den Gips-Kuchen die Schnittränder nicht mehr zusammenlaufen. Das Versteifungsende ist eingetreten (VE), wenn bei einem Fingerdruck mit einem Druckaufwand von ca. 5 kg kein Wasser mehr aus dem Gips-Kuchen austritt.

**Tabelle 3: Ausbreitmass (ABM) in mm und Versteifungsbeginn/-ende in Minuten (min) und Sekunden (sec)**

| Verflüssiger | Beschleuniger | V-Beginn (min:sec) | V-Ende (min:sec) | ABM 2 min |
|---|---|---|---|---|
| ***ohne*** | - | 07:55 | 18:50 | 154 |
| ***P-1*** | - | 13:47 | 34:25 | 196 |
| **P-2** | - | 15:42 | 40:00 | 198 |
| **P-3** | - | 19:00 | 43:00 | 186 |
| ***V-1*** | - | 43:30 | 79:20 | 169 |
| **V-2** | - | 07:40 | 19:20 | 146 |
| **V-3** | - | 11:25 | 27:40 | 173 |
| ***V-4*** | - | 07.55 | 20:30 | 172 |
| ***V-5*** | - | 07:20 | 18:20 | 176 |
| ***ohne*** | CaSO₄*2H₂O | 02:00 | 05:00 | 93 |
| ***P-1*** | CaSO₄*2H₂O | 03:49 | 09:30 | 177 |
| **P-2** | CaSO₄*2H₂O | 03:45 | 09:27 | 175 |
| **P-3** | CaSO₄*2H₂O | 04:00 | 10:20 | 170 |
| ***V-1*** | CaSO₄*2H₂O | 09:15 | 15:55 | 170 |
| **V-2** | CaSO₄*2H₂O | 02:00 | 05:55 | 97 |
| **V-3** | CaSO₄*2H₂O | 03:00 | 07:75 | 164 |
| ***V-4*** | CaSO₄*2H₂O | 02:15 | 05:55 | 125 |
| ***V-5*** | CaSO₄*2H₂O | 02:10 | 06:00 | 140 |
| ***ohne*** | K₂SO₄ | 01:50 | 03:50 | 132 |
| ***P-1*** | K₂SO₄ | 04:00 | 08:00 | 200 |
| **P-2** | K₂SO₄ | 05:10 | 10:00 | 204 |
| ***V-1*** | K₂SO₄. | 08.40 | 13:30 | 168 |
| **V-2** | K₂SO₄ | 02:15 | 05:00 | 142 |
| **V-3** | K₂SO₄ | 03:40 | 07:00 | 182 |
| ***V-4*** | K₂SO₄ | 02:00 | 04:00 | 150 |
| ***V-5*** | K₂SO₄ | 02:00 | 04:20 | 166 |

Tabelle 3 zeigt, dass im reinen Gipsslurry aus Calciumsulfat-β-Halbhydrat das Ausbreitmass und somit die Verarbeitbarkeit und die Fliessfähigkeit der Gipszusammensetzungen, welche erfindungsgemäss die Polymere **P-1, P-2** und **P-3** enthalten, sehr gut ist. Um den Anforderungen in der Praxis besser gerecht zu werden, enthält eine Gipszusammensetzung in der Regel einen Beschleuniger. Es sind also insbesondere die Beispiele mit dem Beschleuniger interessant. Die erfindungsgemässen Zusammensetzungen mit den Polymeren **P1** bis **P3** weisen somit ein deutlich besseres Fliessverhalten als die Vergleichsbeispiele auf, ohne dass der Versteifungsbeginn oder das Versteifungsende zu stark verzögert wird.

Vergleichsbeispiel **V-1** enthält ein Polymer mit nur kurzen Seitenketten von 1000 g/mol. Vergleichsbeispiel **V-2** enthält ein Polymer mit einem zu tiefen Säuregehalt und Vergleichsbeispiel **V-3** enthält ein Polymer mit einem tiefen Säuregehalt und kurzen Seitenketten. Alle diese Eigenschaften führen zu einem reduzierten Ausbreitmass in einer Calciumsulfat-β-Halbhydrat Zusammensetzung. Auch bei den herkömmlichen Verflüssigern (Melment, **V-4** und Naphthalinsulfonat, **V-5**) ist insbesondere das Ausbreitmass reduziert gegenüber den erfindungsgemäss verwendeten Polymeren.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Verwendung mindestens eines Polymers **P** als Dispergiermittel für Gipszusammensetzungen, wobei das Polymer **P** umfasst:
a) eine Hauptkette enthaltend Kohlenwasserstoffgruppen,
b) mindestens eine Seitenkette umfassend mindestens eine Säuregruppe, ausgewählt aus der Gruppe bestehend aus Carbonsäuregruppe, Sulfonsäuregruppe, Phosphonsäuregruppe, Phosphorsäuregruppe oder ein Salz davon, und
c) mindestens eine Seitenkette mit einem Molekulargewicht M_{w} von mindestens 1800 g/mol umfassend mindestens eine Polyoxyalkylengruppe, wobei die Polyoxyalkylengruppe über ein Verbindungsstück, welches mindestens eine Ester-, Amid- oder Imidgruppe umfasst, an die Hauptkette gebunden ist;
und wobei der Säuregehalt des Polymers 1.5 bis 4, bevorzugt 1.7 bis 3.5 mmol Säuregruppen pro 1 g Polymer beträgt.

2. Verwendung eines Polymers **P** gemäss Anspruch 1, **dadurch gekennzeichnet, dass** die Gipszusammensetzung mindestens 30 Gew.-%, bevorzugt mindestens 70 Gew.-% Gips enthält, bezogen auf das Gesamtgewicht des Bindemittels.

3. Verwendung eines Polymers **P** gemäss Anspruch 1 oder 2, **dadurch gekennzeichnet, dass** Gips Calciumsulfat-β-Halbhydrat bedeutet.

4. Verwendung eines Polymers **P** gemäss einem der vorhergehenden Ansprüche, **dadurch gekennzeichnet, dass** die Säuregruppe eine Carbonsäuregruppe ist.

5. Verwendung eines Polymers **P** gemäss einem der vorhergehenden Ansprüche, **dadurch gekennzeichnet, dass** die mindestens eine Polyoxyalkylengruppe eine Polyoxyethylengruppe ist oder umfasst.

6. Verwendung eines Polymers **P** gemäss einem der vorhergehenden Ansprüche, **dadurch gekennzeichnet, dass** der Säuregehalt des Polymers 1.8 bis 2.7 mmol Säuregruppen pro 1 g Polymer beträgt.

7. Verwendung eines Polymers **P** gemäss einem der vorhergehenden Ansprüche, **dadurch gekennzeichnet, dass** das Polymer **P** umfasst:
a) mindestens eine Säureeinheit **A** der Formel (I); 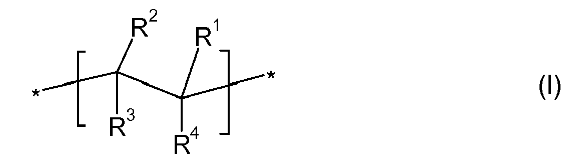
b) mindestens eine Struktureinheit B der Formel (II); 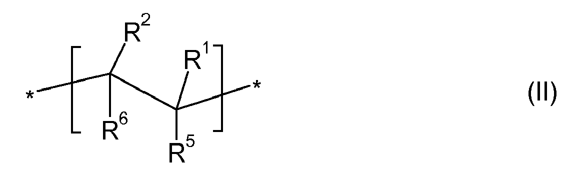 und gegebenenfalls
c) mindestens eine weitere Struktureinheit **C;**
wobei R¹ und R² je unabhängig voneinander für H, COOM, CH₂COOM oder eine Alkylgruppe mit 1 bis 5 Kohlenstoffatomen stehen,
wobei R³ unabhängig voneinander für H, CH₃, COOM oder CH₂COOM steht; und
wobei R⁴ unabhängig voneinander für einen Rest der Carbonsäure, Sulfonsäure, Phosphorsäure oder Phosphonsäure oder einem Salz davon steht;
oder wobei R³ mit R⁴ einen Ring bildet zu -CO-O-CO-;
wobei M für H, Alkalimetall, Erdalkalimetall, Ammonium, Ammoniumkation, oder Mischungen davon steht;
wobei R⁵ unabhängig voneinander für einen Rest der Formel (III) steht
-(CH₂)ₓ-R⁷-(R⁸O)_{y}-R⁹ (III)
wobei R⁷ für ein Ester-, Amid- oder Imid-Verbindungsstück, vorzugsweise für -COO- oder -CO-NH- steht;
wobei R⁸ für eine C₂ - C₆ Alkylengruppe, vorzugsweise eine C₂ - C₄ Alkylengruppe oder eine Mischung davon steht,
wobei R⁹ für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei x unabhängig voneinander für den Wert 0 oder 1 stehen;
wobei y unabhängig voneinander für den Wert 40 - 250 steht; und wobei R⁶ unabhängig voneinander für H, CH₃, COOM, CH₂COOM oder einen Substituenten wie für R⁵ definiert steht.

8. Verwendung eines Polymers **P** gemäss Anspruch 7, **dadurch gekennzeichnet, dass** R¹, R², R³ und R⁶ für H und R⁴ für COOM steht.

9. Verwendung eines Polymers **P** gemäss einem der Ansprüche 7 oder 8, **dadurch gekennzeichnet dass,** x für 0 steht.

10. Verwendung eines Polymers **P** gemäss einem der vorhergehenden Ansprüche, **dadurch gekennzeichnet dass** das Polymer **P** erhältlich ist durch oder hergestellt wird mittels polymeranaloger Reaktion der Veresterung und/oder Amidierung einer Polycarbonsäure.

11. Verwendung eines Polymers **P** gemäss einem der Ansprüche 1 bis 9, **dadurch gekennzeichnet dass** das Polymer **P** erhältlich ist durch oder hergestellt wird mittels einer radikalischen Polymerisationsreaktion.

12. Verwendung gemäss einem der Ansprüche 7 bis 11, **dadurch gekennzeichnet, dass** das Polymer **P** 50 bis 99.5 Mol-%, vorzugsweise 70 bis 99 Mol-% der Säureeinheit **A** der Formel (I), 0.5 bis 50 Mol-%, vorzugsweise 1 bis 30 Mol-% der Struktureinheit **B** der Formel (II), und gegebenenfalls 0 bis 49 Mol-% der Struktureinheit **C** umfasst, jeweils bezogen auf die Gesamtmolmenge der Struktureinheiten von **A, B** und **C** im Polymer **P.**

13. Verwendung eines Polymers **P** gemäss einem der vorhergehenden Ansprüche zur Herstellung von Gipsplatten, insbesondere Gipskartonplatten.

14. Bindemittel enthaltendes Gemisch umfassend mindestens 30 Gew.-%, Gips, bezogen auf das Gesamtgewicht des Bindemittels und mindestens ein Polymer **P** wie in einem der vorhergehenden Ansprüche definiert.

15. Verfahren zur Herstellung eines Bindemittel enthaltenden Gemisches gemäss Anspruch 14, **dadurch gekennzeichnet, dass** das Polymer **P** getrennt oder als Zusatzmittel vorgemischt in fester oder flüssiger Form dem Bindemittel zugegeben wird.
